Europäisches Patentamt

European Patent Office

Office européen des brevets

(11) Veröffentlichungsnummer: **0 107 761**
**B2**

(12) **NEUE EUROPÄISCHE PATENTSCHRIFT**

(45) Veröffentlichungstag der neuen Patentschrift:
04.04.90

(51) Int. Cl.⁵: **F 16 H 59/00** // G05G19/00

(21) Anmeldenummer: **83108452.0**

(22) Anmeldetag: **27.08.83**

(54) **Gangschaltung für ein fremdkraftbetätigtes Getriebe.**

(30) Priorität: **09.10.82 DE 3237509**

(43) Veröffentlichungstag der Anmeldung:
**09.05.84 Patentblatt 84/19**

(45) Bekanntmachung des Hinweises auf die
Patenterteilung:
**29.07.87 Patenblatt 87/31**

(45) Bekanntmachung des Hinweises auf die
Entscheidung u̇ber den Einspruch:
**04.04.90 Patentblatt 90/14**

(84) Benannte Vertragsstaaten:
**DE FR GB IT SE**

(56) Entgegenhaltungen:
EP-A-0 046 845     DE-A-3 007 953
DE-A-1 964 524     DE-A-3 231 991
DE-A-2 050 291     DE-B-1 141 542
DE-A-2 522 240     FR-A-2 270 636
DE-A-2 532 008

THE AUTOCAR, Band 109, August 1958, "Push
button gear change", Seite 164

(73) Patentinhaber: **WABCO Westinghouse**
**Fahrzeugbremsen GmbH**
**Am Lindener Hafen 21 Postfach 91 12 80**
**D-3000 Hannover 91 (DE)**

(72) Der Erfinder hat auf seine Nennung verzichtet

(74) Vertreter: **Schrödter, Manfred**
**WABCO Westinghouse Fahrzeugbremsen**
**GmbH Am Lindener Hafen 21 Postfach 91 12 80**
**D-3000 Hannover 91 (DE)**

**Beschreibung**

Die Erfindung bezieht sich auf eine Gangschaltung für ein fremdkraftbetätigtes Getriebe gemäß dem Oberbegriff des Patentanspruches 1, wie sie aus der DE—A—1 964 524 bekannt ist. Dort erfolgt grundsätzlich ein schrittweises Schalten, wobei der Schalthebel eine Hochschalt- und eine Runterschaltposition aufweist. Ein Überspringen von Gängen ist nicht möglich.

Es sind weitere verschiedene Ausführungen von Gangschaltungen für Schaltgetriebe bekannt. Die gebräuchlichste ist die sogenannte H-Schaltung mit vier Vorwärtsgängen bei Personnenkraftwagen und vier bis sechzehn Vorwärtsgängen bei Nutzfahrzeugen. Hierbei kann das Auffinden eines bestimmten Ganges schwierig sein. Dies trifft besonders bei Nutzfahrzeugen mit relativ vielen Gängen zu, wenn ein oder mehrere Gänge übersprungen werden sollen.

Es sind weiterhin sogenannte Linearschaltungen bekannt (DE—A 30 32 403). Bei diesen Gangschaltungen sind die Gänge geradlinig in einer Ebene angeordnet. Auch hier macht das Auffinden eines bestimmten Ganges bei Getrieben mit vielen Gängen Schwierigkeiten, da die einzelnen Gänge sehr dicht beieinander liegen. Damit wird die Bedienung des Fahrzeugs erschwert, da der Fahrer vom Verkehr abgelenkt wird und auf den Schalthebel sehen muß.

Der Erfindung liegt die Aufgabe zugrunde, eine Gangschaltung der eingangs genannten Art anzugeben, die sich besonders einfach, ohne den Fahrer abzulenken, auch bei sehr vielen Gängen schalten läßt.

Diese Aufgabe wird durch die im Patentanspruch 1 enthaltenen Merkmale gelöst. Es gibt nur noch eine oder zwei Stellungen für einen Schaltbefehlsgeber, die den Befehlen « Schalten » bzw. « Heraufschalten » und « Herunterschalten » entsprechen. Wesentlich hierbei ist, daß die Auswerteschaltung einen günstigen der möglichen Gänge auswählt. Die Unteransprüche enthalten zweckmäßige Weiterbildungen der Erfindung.

Die Erfindung wird im folgenden anhand einer Zeichnung, die schematisch dargestellte Ausführungsbeispiele enthält, näher erläutert.

Es zeigen:

Figur 1 eine Gangschaltung mit beidseitig schaltbarem Schalthebel

Figur 2 eine Gangschaltung mit einseitig schaltbarem Schalthebel

Figur 3 den Schalthebel aus Fig. 2

Figur 4 eine Ausführung der Gangschaltung, bei der anstelle eines Schalthebels ein Tastenfeld vorgesehen ist.

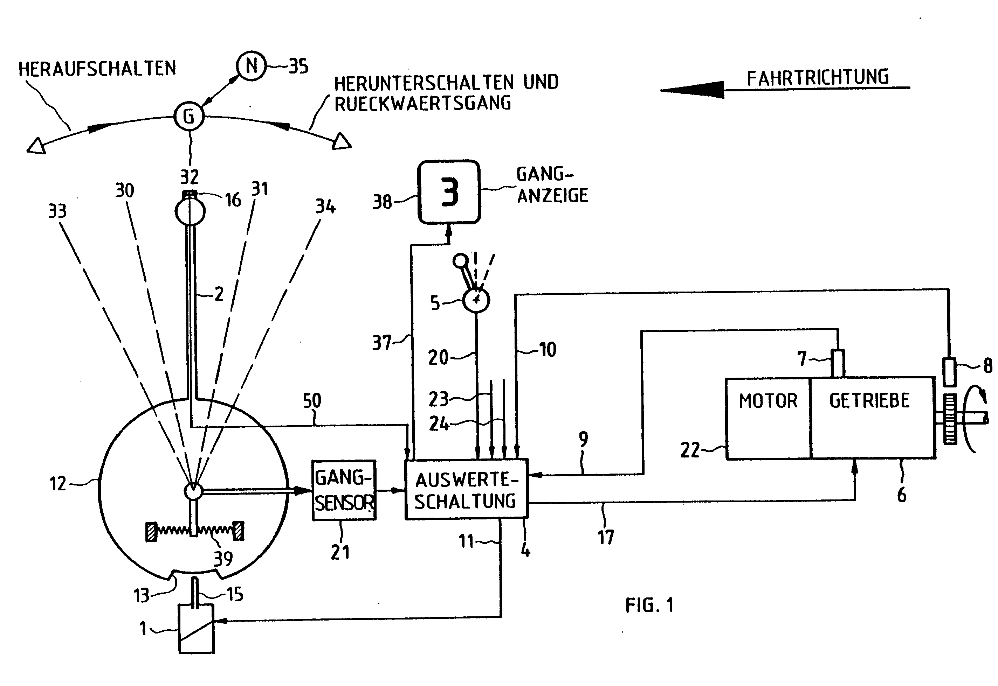

Gemäß Fig. 1 ist ein Verbrennungsmotor 22 an ein Getriebe 6 angeflanscht. Einer elektronischen Auswerteschaltung 4 wird durch einen Drehzahlsensor 8 über eine Leitung 10 ein Signal über die Ausgangsdrehzahl des Getriebes zugeführt. Über einen zweiten Sensor 7 wird der jeweils eingelegte Gang abgetast und über eine Leitung 9 ebenfalls der Auswerteschaltung 4 zugeführt. Über weitere Leitungen 23, 24 werden der Auswertesschaltung 4 Signale über die Beladung des Fahrzeugs und die Gaspedalstellung bzw. den Regelstangenweg an der Einspritzpumpe übermittelt. Über eine Leitung 20 ist ferner ein Fahrprogrammwähler 5 angeschlossen. Mit diesem sind verschiedene Fahrprogramme, z.B. « zügig » oder « ökonomisch », « Stadt » oder « Gelände », wählbar. Über einen Gangsensor 21 wird die jeweilige Stellung eines Schalthebels 2 abgetastet und ebenfalls der Auswerteschaltung 4 mitgeteilt.

Aus den eingegebenen Daten berechnet die Auswerteschaltung 4 nach einem vorgegebenen Programm einen optimalen Gang. Dieser Gang wird bei Betätigung des Schalthebels 2 in Fahrtrichtung auf die Ganganwahlposition 30 (Heraufschalten oder entgegen der Fahrtrichtung auf die Ganganwahlposition 31 (Herunterschalten), je nachdem, ob es sich um einen höheren oder niedrigeren Gang handelt, durch die Auswerteschaltung 4 über eine Leitung 17 dem Getriebe 6 mitgeteilt und dort hilfskraftbetätigt eingelegt. Hauptsächliche Kriterien für die Berechnung des neuen Ganges sind dabei die Getriebeausgangsdrehzahl bzw. Fahrzeuggeschwindigkeit, die Motordrehzahl, Verbrauchs- und Lastkriterien. Die Motordrehzahl wird dabei aus den Informationen der Sensoren 8 und 7 intern bechnet. Die genaue Funktionsweise der Auswerteschaltung 4, die z.B. einen Mikrocomputer erhalten kann, ist nicht Gegenstand der Erfindung und wird daher nicht näher erläutert.

Über eine weitere Ausgangsleitung 37 steuert die Auswerteschaltung 4 eine Ganganzeige 38 an. Auf dieser wird der gerade eingelegte und/oder der von der Auswerteschaltung vorgeschlagene optimale Gang angezeigt. Weiter können auch Überdrehzahlen des Motors und Fehlfunktionen im elektronischen oder mechanischen Teil der Gangschaltung angezeigt werden, z.B. mittels einer Warnlampe (nicht dargestellt).

Eine weitere Ausgangsleitung 11 dient zum Ansteuern einer Sperrvorrichtung 1. Diese besitzt einen magnetisch betätigbaren Sperrstift 15, der in eine Ausnehmung 13 einer am Schalthebel 2 befestigten Kulissenscheibe 12 eingreift.

Der Schalthebel 2 besitzt eine Mittelstellung 32 (G), diese wird nach einer Schaltbewegung von selbst wieder eingenommen. Hierzu dient eine Feder 39.

Zum Einschalten des Leerlaufs ist der Schalthebel 2 rechtwinklig zur Schaltbewegung aus der Mittelstellung 32 in eine Neutralstellung 35 (N) bewegbar.

Im folgenden wird die Funktionsweise der Gangschaltung gemäß Fig. 1 beschrieben.

Will der Fahrer einen höheren Gang einschalten, betätigt er eine üblich vorhandene Kupplung (nicht dargestellt) sowie den Schalthebel 2 in Fahrtrichtung zunächst auf die Ganganwahlposition 30. Daraufhin berechnet die Auswerteschaltung 4 aus den ihr vorliegenden Daten über den Fahrzustand den günstigsten nächsthöheren Gang, dieser kann z. B. der vierte, aber auch der fünfte Gang sein. Der so berechnete Gang wird über die Leitung 17 dem Getriebe 6 mitgeteilt und dort hilfskraftbetätigt eingelegt. Sobald die Gangumschaltung vollzogen ist, wird durch die Auswerteschaltung 4 über die Leitung 11 die Sperrvorrichtung 1 gelöst und damit der Schalthebel 2 entriegelt. Dieser läßt sich jetzt bis in die Endposition 33 vorwärtsschieben. Damit erhält der Fahrer, ohne vom Verkehr abgelenkt zu werden, eine Information darüber, daß die Einlegung des Ganges vollzogen ist, und der Motor wieder eingekuppelt werden kann (Rückmeldung). Der Fahrer kann dann den Ganghebel wieder loslassen. Dieser wird durch die Feder 39 wieder in die Mittelposition 32 gekippt. Die Funktion der Gangrückmeldung ist aus der DE—A—3 007 953 bekannt.

Eine entsprechende Schaltweise gilt auch für das Herunterschalten in einen niedrigeren Gang. Hierzu wird der Schalthebel 2 entgegen der Fahrtrichtung zunächst in eine Ganganwahlposition 31 und nach vollzogener Schaltung in eine Endposition 34 gebracht. Die Feder 39 dient nach vollzogener Schalthandlung zum Zentrieren des Schalthebels 2 in die Mittelstellung 32.

Falls beim herunterschalten in die Ganganwahlposition 31 die Fahrzeuggeschwindigkeit nahezu Null oder Null ist, wird durch die Auswerteschaltung 4 automatisch ein bzw. der Rückwärtsgang eingelegt. Die Schaltung in den Rückwärtsgang kann noch zusätzlich durch die Bedingung « Nur aus dem 1. Gang oder Neutralstellung » sicherer gemacht werden.

Falls bei stehendem Fahrzeug aus de Neutralstellung oder aus dem Rückwärtsgang heraufgeschaltet wird, wird automatisch entweder der erste Gang bei Beladung oder Steigung oder bei geringer Beladung auch der zweite Gang zum Anfahren eingelegt.

Auf dem Schalthebel 2 ist ein vom Fahrer betätigbaren Schalter (Taster) 16 vorgesehen, der über eine Leitung 50 an die Auswerteschaltung 4 angeschlossen ist. Durch diesen kann die optimale Gangauswahl durch die Auswerteschaltung 4 unterdrückt werden. Damit wird bei zusätzlichem Drücken dieses Schalters jeweils nur ein Gang herauf- ode heruntergeschaltet.

In den Ganganwahlpositionen 30, 31 prüft die Auswerteschaltung 4 vor der Ausführung des Schaltbefehles, ob im Schaltfall die maximal zulässige Drehzahl des Motors 22 überschritten wird. Falls eine Überschreitung der maximal zulässigen Motordrehzahl eintreten würde, wird die Schaltung nicht ausgeführt und der alte Gang bleibt geschaltet. Statt dessen kann ein Warnsignal abgegeben werden.

Um ein ordnungsgemäßes Arbeiten der Gangzylinder im Getriebe 6 zu gewährleisten, kann mittels der Aswerteschaltung 4 nach Ausführung eines Gangwechsels ein erneutes Schalten für mindestens eine Sekunde unterdrückt werden.

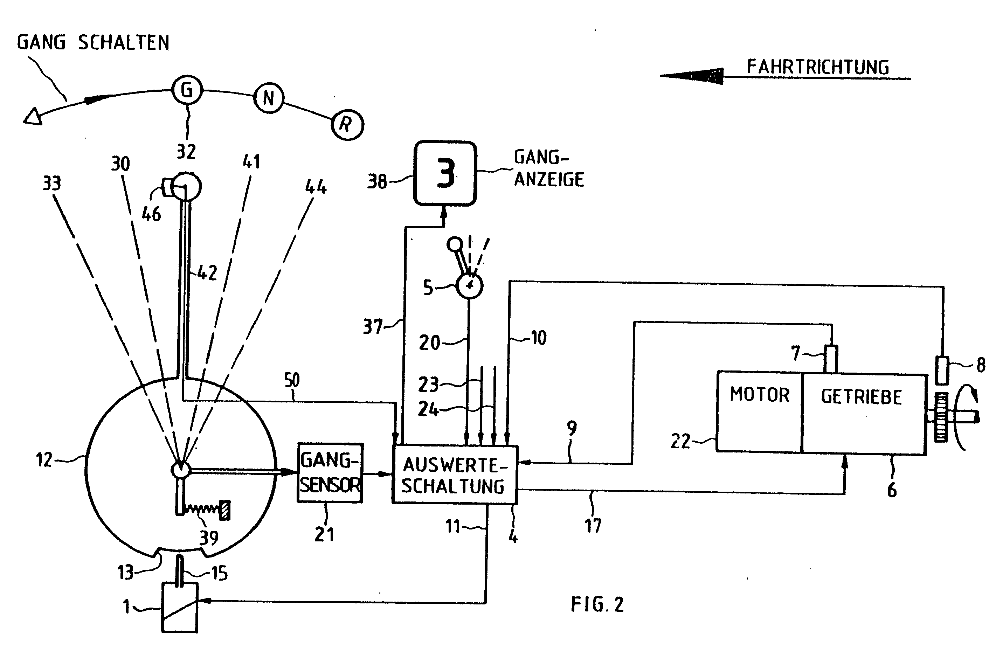

In Figur 2 ist eine Variante der erfindungsgemäßen Gangschaltung mit einem Schalthebel 42 dargestellt, welcher zur Schaltung der Vorwärtsgänge nur in eine Richtung, und zwar in Fahrtrichtung, bewegt zu werden braucht.

Zum Herauf- oder Herunterschalten wird der Schalthebel 42, ausgehend von der Mittelposition 32 (G) zunächst auf eine Ganganwahlposition 30 geführt. Sobald daraufhin das Einlegen des passenden Ganges durch die Auswerteschaltung 4 bewirkt worden ist, läßt sich der Schalthebel 42 wie oben beschrieben bis zur Endposition 33 weiterbewegen und kehrt dann, unterstützt von der Feder 39, in die Mittelposition 32 zurück.

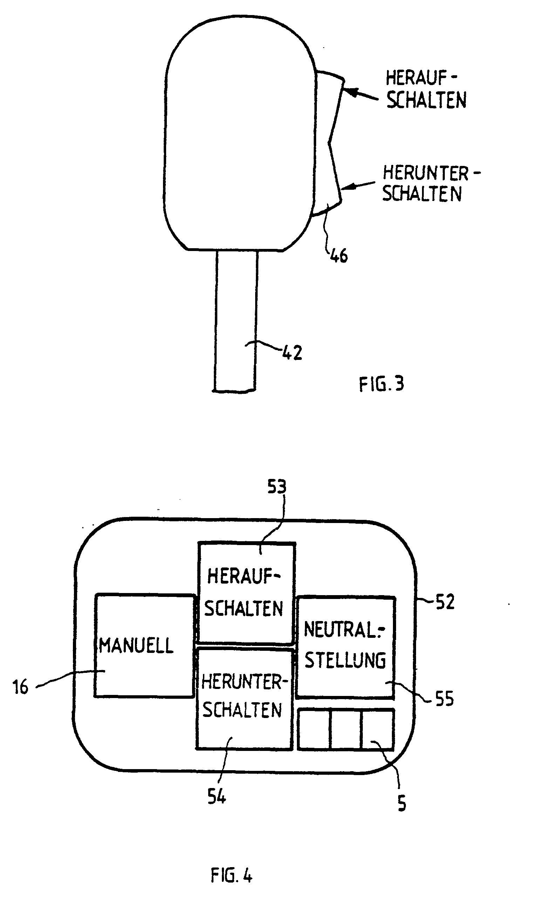

Um der Auswerteschaltung 4 in schwierigen Fahrsituationen mitzuteilen, ob sie hochschalten oder herunterschalten soll, muß der Fahrer gleichzeitig einen am Schalthebel 42 angebrachten Kippschalter 46 entsprechend betätigen (siehe Figur 3). Es wird dann eine Schaltung um nur einen Gang hoch oder herunter ausgeführt.

Der Vorteil dieser Anordnung, die nur noch einen « Schaltbefehl » abgibt, und wobei es der Auswerteschaltung 4 überlassen bleibt, ob herauf oder heruntergeschaltet wird, liegt in einer weiteren Entlastung des Fahrers in normalen Fahrsituationen. Falls jedoch z. B. vor einer Steigung in einen niedrigen, für die Auswerteschaltung « falschen » Gang heruntergeschaltet werden soll, ist dies durch gleichzeitiges Betätigen des Kippschalters 46 möglich.

Zum Erreichen der Neutralposition 41 (N) wird der Schalthebel 42 entgegen der Fahrtrichtung zurückgenommen. Ein weiteres Zurücknehmen des Schalthebels 42 in die Position 44 bewirkt das Einlegen des Rückwärtsganges (R).

Im übrigen gleicht die Funktion der Schaltung nach Figur 2 der nach Figur 1.

In Figur 4 ist eine Variante der Gangschaltung dargestellt, bei der an die Stelle eines Schalthebels ein Tastenfeld 52 tritt. Dieses kann z. B. dort angeordnet sein, wo normalerweise der Schalthebel sitzt. Damit der Fahrer das Tastenfeld auch im Dunkeln zuverlässig bedienen kann, sind besonders große und griffige Tasten vorgesehen, welche auch ohne direkten Blick-kontakt erfühlbar sind.

Die Funktion der Schaltung bleibt die Gleiche wie oben beschrieben. Beim Drücken der Taste 53 schaltet das Getriebe 6 in den nächsthöheren günstigsten Gang. Entsprechend schaltet das Getriebe 6 beim Drücken der Taste 54 in einen optimalen kleineren Gang. Beim Drücken der Taste 16 (Manuell) wird die Funktion der optimalen Gangauswahl abgeschaltet und jeweils nur ein Gang weiter geschaltet. Beim Drücken der Taste 55 wird das Getriebe 6 in der Neutralstellung gebracht.

Der Rückwärtsgang wird wie zur Fig. 1 beschrieben durch Drücken der Taste 54 eingelegt.

Mehrere Tasten 5 dienen wie oben beschrieben zum Einstellen bestimmter Fahrprogramme.

Um die Funktion der Gangrückmeldung auch bei dem als Tastenfeld ausgebildeten Schaltbefehlsgeber 52 zu realisieren, sind die Tasten 53, 54 für Herauf- und Herunterschalten so ausgebildet, daß sie sich zunächst nur ein Stück herunterdrücken lassen (Ganganwahlposition) und nach erfolgter Gangeinlegung ein weiteres Stück herunterdrückbar sind (Endposition). Hierdurch wird dem Fahrer in gleicher Weise wie beim Schalthebel 2, 42 die vollzogene Gangeinschaltung mitgeteilt. Eine derartige Rückmeldung ist für den Fahrer weniger ablenkend als ein akustisches oder optisches Signal.

Das Tastenfeld 52 kann selbstverständlich auch in anderer Form als in Fig. 4 angegeben ausgebildet sein.

Die Anordnung des Tastenfeldes 52 kann an beliebiger vom Fahrer erreichbarer Stelle, beispielsweise auch direkt am Lenkrad, erfolgen.

As weiterer Schritt in Richtung zu einer Vollautomatik kann durch den Schaltbefehlsgeber (2, 42, 52) zusätzlich ein Signal zum Ausrücken der Kupplung abgegeben werden (nicht dargestellt). Entsprechend kann auch das Wiedereinrücken der Kupplung durch die Auswerteschaltung 4 gesteuert werden.

Die oben beschriebene halbautomatische Gangschaltung ermöglicht ein sehr einfaches Schalten des Getriebes, ohne den Fahrer übermäßig vom Verkehr abzulenken. Sie kann auch von ungeübten Fahrern leicht bedient werden. Gegenüber einer Vollautomatik ergibt sich der Vorteil, daß der Fahrerwille berücksichtigt wird.

Ein weiterer Vorteil liegt darin, daß bei verschiedenen Fahrzeugen mit unterschiedlicher Gangzahl das gleiche Schaltgerät verwendet werden kann. Hierdurch ergibt sich eine Verbilligung in der Herstellung. Fahrer, die verschiedene Fahrzeuge fahren, brauchen sich nicht umzugewöhnen.

Da kein durch den Fahrer angewählter unzulässiger Gang geschaltet wird, können die maximal zulässigen Drehzahlschwellen zu niedrigeren Werten verschoben werden. Hieraus folgt eine besondere Schonung des Motors und Getriebes.

Schließlich ermöglicht die erfindungsgemäße Gangschaltung eine ökonomische Fahrweise, da die Auswerteschaltung stets den optimalen Gang errechnet und anzeigt bzw. einlegt.

**Patentansprüche**

1. Gangschaltung für ein fremdkraftbetätigtes Getriebe mit einem vom Fahrer für jeden Gangwechsel zu betätigenden Schaltbefehlsgeber (2, 42, 52), mit einer vom Fahrer oder durch Fremdkraft betätigbaren Kupplung und mit einer elektronischen Auswerteschaltung (4), welche das Einlegen eines Ganges wirkt, gekennzeichnet durch folgende Merkmale:

a) beim Betätigen des Schaltbefehlsgebers (2, 42, 52) in eine Ganganwahlposition (30, 31) gibt der Schaltbefehlsgeber den Befehl « Schalten » an die Auswerteschaltung (4) ab;

b) die Auswerteschaltung (4) ordnet aufgrund von ihr zugeführten Signalen über den Fahrzustand diesem Befehl einen optimalen Gang zu und bewirkt dessen Einlegen.

2. Gangschaltung nach Anspruch 1, gekennzeichnet durch folgendes Merkmal: der Schaltbefehlsgeber (2, 52) gibt den Befehl « Heraufschalten » oder « Herunterschalten ».

3. Gangschaltung nach Anspruch 2, gekennzeichnet durch folgende Merkmale:

a) der Schaltbefehlsgeber ist als Schalthebel (2) ausgebildet;

b) der Schalthebel (2) weist je eine Ganganwahlposition (30, 31) für Herauf- und Herunterschalten auf, der durch die Auswerteschaltung (4) beliebige Vorwärts- oder Rückwärtsgänge zugeordnet werden können (Fig. 1).

4. Gangschaltung nach Anspruch 2 bis 3, dadurch gekennzeichnet, daß ein fahrerbetätigbarer Schalter (16) vorgesehen ist, durch den die Auswahl des optimalen Ganges durch die Auswerteschaltung (4) unterdrückt und jeweils nur ein Gang herauf- oder heruntergeschaltet wird.

5. Gangschaltung nach Anspruch 2 bis 4, dadurch gekennzeichnet, daß der Schalthebel (2) eine durch eine Feder (39) zentrierte Mittelstellung (32) aufweist und nach einer Schaltung in diese zurückkippt.

6. Gangschaltung nach Anspruch 2 bis 5, dadurch gekennzeichnet, daß der Schalthebel (2) eine rechtwinklig zur Schaltrichtung gelegene Neutralstellung (35) aufweist.

7. Gangschaltung nach Anspruch 2 bis 6, dadurch gekennzeichnet, daß der Bewegung des Schalthebels (2) in Fahrtrichtung ein Heraufschalten und der engegengesetzten Bewegung ein Herunterschalten zugeordnet ist.

8. Gangschaltung nach Anspruch 2 bis 7, dadurch gekennzeichnet, daß bei Bewegung des Schalthebels (2) in Rückwärtsrichtung einer der Rückwärtsgänge eingelegt wird, wenn die Fahrzeuggeschwindigkeit Null oder etwa Null ist.

9. Gangschaltung nach Anspruch 1, gekennzeichnet durch folgende Merkmale:

a) der Schaltbefehlsgeber ist als Schalthebel (42) ausgebildet;

b) der Schalthebel (42) weist nur eine einzige Ganganwahlposition (30) für vorwärtsgänge auf (Fig. 2).

10. Gangschaltung nach Anspruch 9, dadurch gekennzeichnet, daß zur Eingabe des Befehls « Heraufschalten » oder « Herunterschalten » am Schalthebel (42) ein Kippschalter oder -taster (46) angebracht ist (Fig. 3).

11. Gangschaltung nach Anspruch 9, dadurch gekennzeichnet, daß der Schalthebel (42) eine rückwärtsgelegene Neutralstellung (41) und eine Rückwärtsgangstellung (44) aufweist.

12. Gangschaltung nach Anspruch 9, dadurch gekennzeichnet, daß die Ganganwahlposition (30) in Fahrtrichtung liegt.

13. Gangschaltung nach Anspruch 1, gekennzeichnet durch die folgenden Merkmale:

a) der Schaltbefehlsgeber ist als Tastenfeld (52) ausgebildet;

b) das Tastenfeld (52) enthält je eine Taste zum Heraufschalten (53) und Herunterschalten (54) (Fig. 4).

14. Gangschaltung nach Anspruch 13, dadurch gekennzeichnet, daß die Tasten (53, 54) in die Ganganwahlposition und nach erfolgter Gangrückmeldung in eine Endposition eindrückbar sind.

15. Gangschaltung nach Anspruch 13 bis 14, dadurch gekennzeichnet, daß das Tastenfeld (52) zusätzlich eine Taste (16) zum Abschalten der Auswerteschaltung (4) und eine Taste (55) zum Einschalten der Neutralstellung enthält, wobei das Schalten der Gänge schrittweise durch Betätigung der Tasten (53, 54) bewirkt wird.

16. Gangschaltung nach Anspruch 1 bis 15, dadurch gekennzeichnet, daß die Auswerteschaltung (4) einen Schaltbefehl nur dann weiterleitet, wenn die maximale Drehzahl des Motors (22) nicht überschritten wird.

17. Gangschaltung nach Anspruch 1 bis 16, dadurch gekennzeichnet, daß die Auswerteschaltung (4) nach Ausführung eines Gangwechsels ein erneutes Schalten für mindestens eine Sekunde unterdrückt.

18. Gangschaltung nach Anspruch 1 bis 17, dadurch gekennzeichnet, daß eine von der Auswerteschaltung (4) angesteuerte Ganganzeige (38) für den gerade eingelegten Gang vorgesehen ist.

19. Gangschaltung nach Anspruch 18, dadurch gekennzeichnet, daß auf der Ganganzeige (38) auch der von der Auswerteschaltung (4) ausgewählte günstige Gang angezeigt wird.

20. Gangschaltung nach Anspruch 18 bis 19, dadurch gekennzeichnet, daß Überdrehzahlen oder Fehlfunktionen auf der Ganganzeige (38) angezeigt werden.

21. Gangschaltung nach Anspruch 1 bis 20, dadurch gekennzeichnet, daß die Auswerteschaltung (4) einen Mikrocomputer enthält und die Auswahl des optimalen Ganges nach einem Programm abläuft.

22. Gangschaltung nach Anspruch 21, dadurch gekennzeichnet, daß die Auswahl des optimalen Ganges nach Verbrauchs- und/oder Lastkriterien und/oder Getriebekriterien erfolgt.

23. Gangschaltung nach Anspruch 1 bis 22, dadurch gekennzeichnet, daß ein zusätzlicher Fahrprogrammwähler (5) vorgesehen ist, mit dem verschiedene Fahrprogramme wie « zügig », « ökonomisch », « Stadt » oder « Gelände » wählbar sind.

## Claims

1. Gear shift for a power-assisted transmission with a shift command element (2, 42, 52) to be operated by the driver for each gear change, with a clutch operable by the driver or with power assistance and with an electronic evaluation circuit (4) which affects the engagement of a gear, characterised by the following features:

a) on operation of the shift command element (2, 42, 52) into a gear selection position (30, 31), the shift command element delivers the command "shift" to the evaluation circuit (4);

b) the evaluation circuit (4), on the basis of signals fed to it concerning the driving condition, allocates to this command an optimum gear and causes the engagement thereof.

2. Gear shift according to claim 1, characterised by the following feature:

the shift command element (2, 52) gives the command "shift up" or "shift down".

3. Gear shift according to claim 2, characterised by the following features:

a) the shift command element is formed as a shift lever (2);

b) the shift lever (2) has a shift selection position each (30, 31) for shifting up and shifting down, which may be allocated any forward or reverse gears by the evaluation circuit (4) (Fig. 1).

4. Gear shift according to claim 2 or 3, characterised in that a driver-operable switch (16) is provided by means of which the selection of the optimum gear by the evaluation circuit (4) is prevented and a shift up or down of only one gear is executed.

5. Gear shift according to claims 2 to 4, characterised in that the shift lever (2) has a middle position (32) centered by a spring (39) and switches back into this position after a shift has occurred.

6. Gear shift according to claims 2 to 5, characterised in that the shift lever (2) has a neutral position (35) situated at right angles to the shift direction.

7. Gear shift according to claims 2 to 6, characterised in that there is allocated to the movement of the shift lever (2) in the direction of travel a shifting up and to the reverse movement a shifting down.

8. Gear shift according to claims 2 to 7, characterised in that on movement of the shift lever (2) in the reverse direction one of the reverse gears is engaged if the speed of the vehicle is zero or roughly zero.

9. Gear shift according to claim 1, characterised by the following features:

a) the shift command element is formed as a shift lever (42);

b) the shift lever (42) has only a single gear selection position (30) for forward gears (Fig. 2).

10. Gear shift according to claim 9, characterised in that in order to give the command "shift up" or "shift down" a rocker switch or key (46) is mounted on the shift lever (42) (Fig. 3).

11. Gear shift according to claim 9, characterised in that the shift lever (42) has a rearwardly positioned neutral position (41) and a reverse gear position (44).

12. Gear shift according to claim 9, characterised in that the gear selection position (30) is located in the direction of travel.

13. Gear shift according to claim 1, characterised by the following features:

a) the shift command element is formed as a keyboard (52);

b) the keyboard (52) contains one key each for shifting up (53) and for shifting down (54) (Fig. 4).

14. Gear shift according to claim 13, characterised in that the keys (53, 54) can be pressed into the gear selection position and, when the selection of the gear has been accepted, into an end position.

15. Gear shift according to claim 13 to 14, characterised in that the keyboard (52) contains, in addition, a key (16) for switching off the evaluation circuit (4) and a key (55) for switching on the neutral position, the shifting of the gears being effected in steps by operation of the keys (53, 54).

16. Gear shift according to claims 1 to 5, characterised in that the evaluation circuit (4) forwards a shift command only if the maximum number of revolutions per minute of the motor (22) is not exceeded.

17. Gear shift according to claims 1 to 16, characterised in that after a change of gear has been executed the evaluation circuit (4) prevents another shift for at least one second.

18. Gear shift according to claims 1 to 17, characterised in that a gear indicator (38) controlled by the evaluation circuit (4) is provided for indicating the gear that has just been engaged.

19. Gear shift according to claim 18, characterised in that there is also indicated on the gear indicator (38) the most favourable gear selected by the evaluation circuit (4).

20. Gear shift according to claim 18 to 19, characterised in that excessive engine speed or error functions are indicated on the gear indicator (38).

21. Gear shift according to claims 1 to 20, characterised in that the evaluation circuit (4) contains a microcomputer and the selection of the optimum gear occurs in accordance with a programme.

22. Gear shift according to claim 21, characterised in that the selection of the optimum gear is effected in acordance with fuel consumption and/ or load criteria and/or transmission criteria.

23. Gear shift according to claims 1 to 22, characterised in that an additional driving programme selector (5) is provided with which it is possible to select various driving programmes such as "steady", "economy", "town" or "country".

## Revendications

1. Changement de vitesse pour une transmission à commande par force séparée, avec un émetteur d'ordres de changement de vitesse (2, 42, 52) à actionner par le conducteur pour chaque changement de vitesse, un embrayage actionné par le conducteur ou par une force séparée, et un circuit traducteur électronique (4) qui produit le passage d'une vitesse, ledit changement de vitesse étant caractérisé en ce que:

a) l'émetteur d'ordes de changement de vitesse (2, 42, 52), lorsqu'il est amené sur une position de sélection (30, 31), délivre l'ordre "changement de vitesse" au circuit traducteur (4); et

b) à partir des signaux reçus relatifs au régime, le circuit traducteur (4) affecte une vitesse optimale audit ordre et provoque son passage.

2. Changement de vitesse selon revendication 1, caractérisé en ce que l'émetteur (2, 52) délivre l'ordre "monter des vitesses" ou "descendre des vitesses".

3. Changement de vitesse selon revendication 2, caractérisé en ce que:

a) l'émetteur d'ordres de changement de vitesse est réalisé sous forme d'un levier de changement de vitesse (2); et

b) le levier de changement de vitesse (2) comporte une position 30 de sélection de montée des vitesses et une position 31 de sélection de descente des vitesses, auxquelles le circuit traducteur (4) peut affecter des vitesses quelconques de marche avant ou marche arrière (figure 1).

4. Changement de vitesse selon revendications 2 et 3, caractérisé par un interrupteur (16) actionné par le conducteur, supprimant la sélection de la vitesse optimale par le circuit traducteur (4) et provoquant uniquement le passage à la vitesse immédiatement supérieure ou inférieure.

5. Changement de vitesse selon revendications 2 à 4, caractérisé en ce que le levier (2) présente une position centrale (32) centrée par un ressort (39) et dans laquelle il revient après un changement de vitesse.

6. Changement de vitesse selon revendications 2 à 5, caractérisé en ce que le levier (2) présente une position neutre (35) décalée perpendiculairement au sens du changement de vitesse.

7. Changement de vitesse selon revendications 2 à 6, caractérisé en ce qu'une montée des vitesses est affectée au mouvement du levier de changement de vitesse (2) suivant le sens de déplacement du véhicule et une descente des vitesses au mouvement dans le sens inverse.

8. Changement de vitesse selon revendications 2 à 7, caractérisé en ce que le mouvement du levier (2) dans le sens arrière passe une des vitesses de marche arrière quand la vitesse du véhicule est nulle ou sensiblement nulle.

9. Changement de vitesse selon revendication 1, caractérisé en ce que:

a) l'émetteur d'ordres de changement de vitesse est réalisé sous forme d'un levier de changement de vitesse (42); et

b) le levier (42) ne comprend qu'une position de sélection (30) pour les vitesses de marche avant (figure 2).

10. Changement de vitesse selon revendication 9, caractérisé par un interrupteur ou un bouton-poussoir à bascule (46) monté sur le levier de changement de vitesse (42) pour l'entrée de l'ordre "montée des vitesses" ou "descente des vitesses" (figure 3).

11. Changement de vitesse selon revendication 9, caractérisé en ce que le levier de changement de vitesse (42) comporte une position neutre (41) décalée vers l'arrière et une position de marche arrière (44).

12. Changement de vitesse selon revendication 9, caractérisé en ce que la position de sélection (30) se situe dans le sens du déplacement.

13. Changement de vitesse selon revendication 1, caractérise en ce que:

a) l'émetteur d'ordres de changement de vitesse est réalisé sous forme d'un clavier (52); et

b) le clavier (52) comprend une touche de montée des vitesses (53) et une touche de descente des vitesses (54) (figure 4).

14. Changement de vitesse selon revendication 13, caractérisé en ce que les touches (53, 54) peuvent être enfoncées sur la position de sélection et, après répétition du passage de la vitesse, sur une position limite.

15. Changement de vitesse selon revendications 13 et 14, caractérisé en ce que le clavier (52) comprend en outre une touche (16) de coupure du circuit traducteur (4) et une touche (55) de passage sur la position neutre, le passage des vitesses s'effectuant pas à pas par enfoncement des touches (53, 54).

16. Changement de vitesse selon revendications 1 à 5, caractérisé en ce que le circuit traducteur (4) transmet un ordre de changement de vitesse uniquement quand la vitesse de rotation maximale du moteur (22) n'est pas dépassée.

17. Changement de vitesse selon revendications 1 à 16, caractérisé en ce que le circuit traducteur (4), après l'exécution d'un changement de vitesse, interdit un nouveau changement de vitesse pendant une second au moins.

18. Changement de vitesse selon revendications 1 à 18, caractérisé par un indicateur (38) de la vitesse passée, commandé par le circuit traducteur (4).

19. Changement de vitesse selon revendication 18, caractérisé en ce que l'indicateur (38) indique aussi la vitesse optimale sélectée par le circuit traducteur (4).

20. Changement de vitesse selon revendications 18 et 19, caractérisé en ce que des survitesses ou des fonctions erronées sont indiquées par l'indicateur de vitesse (38).

21. Changement de vitesse selon revendications 1 à 20, caractérisé en ce que le circuit traducteur (4) comprend un micro-ordinateur et la sélection de la vitesse optimale s'effectue selon un programme.

22. Changement de vitesse selon revendication 21, caractérisé en ce que la sélection de la vitesse optimale s'effectue selon des critères de consommation et/ou de charge et/ou des critères de la boîte de vitesses.

23. Changement de vitesse selon revendications 1 à 22, caractérisé par un sélecteur (5) supplémentaire de programme de conduite, permettant de sélecter divers programmes de conduite tels que "rapide", "économique", "ville" ou "route".

FIG. 1

EP 0 107 761 B2

GANG SCHALTEN

FAHRTRICHTUNG

G  N  R

32  30  33  41  44  46  42

38  3  GANG-ANZEIGE

37  5  10  20  23  24  9  7  8

50  GANG-SENSOR  21

AUSWERTE-SCHALTUNG  11  4  17

MOTOR  GETRIEBE  22  6

12  13  39  15  1

FIG. 2

HERAUF-
SCHALTEN

HERUNTER-
SCHALTEN

46

42

FIG. 3

53

HERAUF-
SCHALTEN

52

MANUELL

NEUTRAL-
STELLUNG

16

HERUNTER-
SCHALTEN

55

54

5

FIG. 4